# EUROPÄISCHE PATENTANMELDUNG

(11) **EP 4 465 411 A1**
(43) Veröffentlichungstag der Anmeldung: **20.11.2024**
(21) Anmeldenummer: 23173700.8
(22) Anmeldetag: 16.05.2023
(51) Int. Cl.: H01M 10/44, H01M 10/48

(54) **VERFAHREN UND VORRICHTUNG ZUM TIEFENTLADEN EINER BATTERIE**

(71) Anmelder: Siemens Aktiengesellschaft, 80333 München (DE)
(72) Erfinder: Baldauf, Manfred, 91056 Erlangen (DE); Franke, Martin, 14089 Berlin (DE); Schulte, Sascha, 91315 Höchstadt (DE)
(74) Vertreter: Siemens Patent Attorneys

(57) **Zusammenfassung**

Es wird ein Verfahren zum Tiefentladen einer Batterie (3) mit einer Entladevorrichtung (1) vorgeschlagen, wobei beim Tiefentladen eine Temperatur der Batterie mittels einer Temperaturmesseinheit (2) erfasst wird, und für das Tiefentladen eine maximal zulässige Temperatur festgelegt ist. Das erfindungsgemäße Verfahren ist gekennzeichnet dadurch, dass eine für das Tiefentladen vorgesehene Entladeleistung derart geregelt wird, dass die erfasste Temperatur möglichst hoch, jedoch kleiner als die maximal zulässige Temperatur ist.

Weiterhin betrifft die Erfindung eine Entladevorrichtung (1) zum Tiefentladen einer Batterie (3) sowie ein Verfahren zum Entsorgen, zum Recycling oder zur Wiederverwendung einer Batterie (3).

## Beschreibung

Die Erfindung betrifft ein Verfahren zum Tiefentladen einer Batterie gemäß dem Oberbegriff des Patentanspruches 1, eine Entladevorrichtung gemäß dem Oberbegriff des Patentanspruches 11 sowie ein Verfahren zum Entsorgen, zum Recycling oder zur Wiederverwendung einer Batterie gemäß dem Oberbegriff des Patentanspruches 15.

Batterien, insbesondere Speicherbatterien für elektrische Fahrzeuge und vergleichbare Anwendungen, müssen nach Ablauf ihrer regulären Lebensdauer entsorgt, recycelt oder in eine Wiederverwendung (2nd-life-Anwendung) überführt werden.

Beim Entsorgen und Recycling von Batterien werden diese typischerweise vollständig tiefentladen, das heißt, dass diese nach dem Tiefentladen im Wesentlichen keine Spannung mehr aufweisen. Eine Tiefentladung ist grundsätzlich eine Verletzung des erlaubten Betriebsbereiches der Batterie, der je nach Batterietyp typischerweise eine Mindestspannung von 2,5 Volt bis 3 Volt fordert.

Allerdings ist eine Tiefentladung der Batterie bei ihrer Entsorgung, ihrem Recycling oder ihrer Wiederverwendung erforderlich, damit Risiken, beispielsweise Kurzschlüsse, bei ihrer Zerlegung vermieden werden.

Weiterhin ist ebenfalls die Tiefentladung von Batterien mit Risiken und Gefahren verbunden. Bei einer falschen Entladung, beispielsweise mit einer zu großen Entladeleistung, könnte die Batterie in Brand geraten. Insbesondere können Ströme, die während des Normalbetriebs der Batterie akzeptabel sind, bei einer Tiefentladung bereits kritisch sein.

Für den Normbetrieb liegen typischerweise vom Hersteller definierte und garantierte Betriebsbereiche vor, bei denen für unterschiedliche Zustände jeweils abgesicherte Maximalgrenzen für die Leistung vorgegeben sind. Für einen irregulären Betrieb außerhalb des erlaubten Bereiches, beispielsweise bei einem Tiefentladen der Batterie, sind solche Daten typischerweise nicht vorhanden. Somit werden Batterien beziehungsweise Batteriezellen nach dem Stand der Technik sehr langsam entladen.

Der vorliegenden Erfindung liegt die Aufgabe zugrunde, eine schnellere, aber dennoch möglichst sichere Tiefentladung für Batterien bereitzustellen.

Die Aufgabe wird durch ein Verfahren mit den Merkmalen des unabhängigen Patentanspruches 1, durch eine Vorrichtung mit den Merkmalen des unabhängigen Patentanspruches 11 sowie durch ein Verfahren mit den Merkmalen des unabhängigen Patentanspruches 15 gelöst. In den abhängigen Patentansprüchen sind vorteilhafte Ausgestaltungen und Weiterbildungen der Erfindung angegeben.

Das erfindungsgemäße Verfahren zum Tiefentladen einer Batterie beziehungsweise einer Batteriezelle erfolgt mit einer Entladevorrichtung, wobei beim Tiefentladen eine Temperatur der Batterie mittels einer Temperaturmesseinheit erfasst wird, und für das Tiefentladen eine maximal zulässige Temperatur festgelegt ist. Das Verfahren ist gekennzeichnet dadurch, dass eine für das Tiefentladen vorgesehene Entladeleistung derart geregelt wird, dass die erfasste Temperatur möglichst hoch, jedoch kleiner als die maximal zulässige Temperatur ist.

Eine Tiefentladung einer Batterie beziehungsweise wenigstens einer Batteriezelle, ist eine Entladung der Batterie außerhalb ihres zulässigen Spannungsbereiches, insbesondere eine im Wesentlichen vollständige Entladung der Batterie.

Die Temperatur beim Tiefentladen kann gemäß festgelegter Zeitschritte oder kontinuierlich erfasst werden. Somit erfolgt bevorzugt eine quasi-kontinuierliche beziehungsweise kontinuierliche Temperaturüberwachung beim Tiefentladen.

Eine Temperatur kann im Sinne der vorliegenden Erfindung möglichst hoch sein, wenn diese der maximal zulässigen Temperatur möglichst nahe ist, das heißt lediglich einen festgelegten minimalen Sicherheitsabstand zur maximal zulässigen Temperatur aufweist. Beispielsweise kann ein solcher Sicherheitsabstand einen Wert im Bereich von 10 Kelvin bis 20 Kelvin aufweisen.

Gemäß der vorliegenden Erfindung wird die Temperatur beim Tiefentladen, die zeitabhängig sein kann, mittels der Temperaturmesseinheit erfasst. Basierend auf der erfassten Temperatur wird die Entladeleistung beziehungsweise der Entladestrom, der für das Tiefentladen vorgesehen ist beziehungsweise verwendet wird, durch die Entladevorrichtung geregelt. Die Entladevorrichtung ist somit dazu ausgebildet, die Entladeleistung beziehungsweise den Entladestrom in Abhängigkeit der erfassten Temperatur, das heißt in Abhängigkeit einer aktuellen Temperatur, zu regeln, das heißt zu erhöhen, zu verringern oder konstant zu halten. Die Entladevorrichtung stellt somit die Entladeleistung beziehungsweise den Entladestrom in Abhängigkeit der erfassten Temperatur ein.

Erfindungsgemäß wird die Entladeleistung derart in Abhängigkeit der erfassten Temperatur geregelt, dass die Temperatur der Batterie beziehungsweise der Batteriezelle beziehungsweise der Batteriezellen möglichst hoch ist, jedoch stets unterhalb der maximal zulässigen Temperatur verbleibt. Dadurch wird eine möglichst maximale Entladeleistung erreicht, und dennoch die Sicherheit beim Tiefentladen sichergestellt.

Mit anderen Worten wird der Entladevorgang derart geregelt, dass im Hinblick auf die Sicherheit ein möglichst maximaler Entladestrom und somit eine möglichst hohe Geschwindigkeit der Tiefentladung erreicht wird. Hierbei verbleibt die Temperatur stets unterhalb der maximal zulässigen Temperatur, sodass zwar ein schnelleres, jedoch bezüglich der Sicherheit kein zu schnelles Entladen erfolgt. Dadurch erfolgt das Tiefentladen stets innerhalb eines sicheren Bereiches.

Durch die vorliegende Erfindung wird somit eine vom Batterietyp grundsätzlich unabhängige Maximierung der Entladegeschwindigkeit bei einer Tiefentladung ermöglicht. Dadurch können Zeit und Kosten, insbesondere bei einem Recycling, einer Entsorgung oder einer Wiederverwendung der Batterie, eingespart werden.

Die erfindungsgemäße Entladevorrichtung zum Tiefentladen einer Batterie, wobei die Entladevorrichtung eine Temperaturmesseinheit zur Erfassung einer Temperatur beim Tiefentladen umfasst, und für das Tiefentladen eine maximal zulässige Temperatur festgelegt ist, ist dadurch gekennzeichnet, dass die Entladevorrichtung derart zum Regeln einer für das Tiefentladen vorgesehenen Entladeleistung ausgebildet ist, dass die erfasste Temperatur möglichst hoch, jedoch kleiner als die maximal zulässige Temperatur ist.

Es ergeben sich zum erfindungsgemäßen Verfahren gleichartige, gleichwertige und gleichwirkende Vorteile und/oder Ausgestaltungen der erfindungsgemäßen Entladevorrichtung.

Das erfindungsgemäße Verfahren zum Entsorgen, zum Recycling oder zur Wiederverwendung einer Batterie, ist gekennzeichnet dadurch, dass hierbei die Batterie mittels eines Verfahrens gemäß der Erfindung und/oder einer ihrer Ausgestaltungen tiefentladen wird.

Mit anderen Worten wird eine erfindungsgemäße Entladevorrichtung zum Tiefentladen der Batterie bei einem Verfahren zum Entsorgen, zum Recycling oder zur Wiederverwendung der Batterie verwendet.

Es ergeben sich zum erfindungsgemäßen Verfahren zur Tiefentladung und/oder zur erfindungsgemäßen Entladevorrichtung gleichartige, gleichwertige und gleichwirkende Vorteile und/oder Ausgestaltungen.

Gemäß einer vorteilhaften Ausgestaltung der Erfindung wird die Entladeleistung derart geregelt, dass die erfasste Temperatur beim Tiefentladen wenigstens 10 Prozent, insbesondere wenigstens 20 Prozent, und höchstens 35 Prozent, insbesondere höchstens 30 Prozent, kleiner als die maximal zulässige Temperatur ist.

Hierbei wird angenommen, dass die Temperaturen die Einheit Grad Celsius aufweisen. Wird eine davon verschiedene Einheit verwendet, insbesondere Kelvin, so bilden sich entsprechende äquivalente Prozentwerte aus.

Mit anderen Worten weist die erfasste Temperatur bevorzugt einen Wert im Bereich von **0,65 *· T*ₘₐₓ** bis **0,9 · *T*ₘₐₓ** auf, wobei ***T*ₘₐₓ** die maximal zulässige Temperatur bezeichnet.

Mit anderen Worten weist der Sicherheitsabstand zur maximal zulässigen Temperatur einen Wert im Bereich von **0,1 · *T*ₘₐₓ** bis **0,35 · *T*ₘₐₓ** auf.

Besonders bevorzugt weist die erfasste Temperatur einen Wert im Bereich von **0,7 · *T*ₘₐₓ** bis **0,8 · *T*ₘₐₓ** auf. In diesem Fall weist der Sicherheitsabstand zur maximal zulässigen Temperatur einen Wert im Bereich von **0,2 · *T*ₘₐₓ** bis **0,3 · *T*ₘₐₓ** auf.

Weist beispielsweise die maximal zulässige Temperatur einen Wert von 50 Grad Celsius auf, dann wird die Entladeleistung beziehungsweise der Entladestrom besonders bevorzugt derart geregelt, dass die beim Tiefentladen erfasste Temperatur einen Wert im Bereich von 35 Grad Celsius bis 40 Grad Celsius aufweist. Mit anderen Worten weist die erfasste Temperatur einen Sicherheitsabstand von 10 Kelvin bis 15 Kelvin zur maximal zulässigen Temperatur auf.

Besonderen Batterietypen können höhere oder niedrigere maximal zulässige Temperaturen aufweisen, beispielsweise von 70 Grad Celsius. Beispielsweise weist eine Natrium-Nickelchlorid-Batterie eine typische Arbeitstemperatur im Bereich von 270 Grad Celsius bis 350 Grad Celsius auf. Dadurch weist die maximale zulässige Temperatur einen Wert oberhalb von 350 Grad Celsius auf.

Durch die genannten bevorzugten Temperaturbereiche wird vorteilhafterweise ein besonders schnelles Tiefentladen ermöglicht, und zudem die Sicherheit beim Tiefentladen sichergestellt.

In einer vorteilhaften Weiterbildung der Erfindung wird die Temperatur der Batterie mittels eines Batteriesteuergeräts der Batterie erfasst.

Mit anderen Worten ist bevorzugt die Temperaturmesseinheit derart ausgebildet, dass die Temperatur der Batterie mittels eines Batteriesteuergeräts der Batterie erfasst wird.

Typischerweise weisen Batterien ein Batteriesteuergerät auf, welche dazu ausgebildet ist, die Temperatur der Batterie beziehungsweise einer oder mehrerer ihrer Batteriezellen zu erfassen. Ist ein Datenzugang zum Batteriesteuergerät möglich, so kann die Temperatur beim Tiefentladen vorteilhafterweise über das Batteriesteuergerät ausgelesen werden.

Gemäß einer vorteilhaften Ausgestaltung der Erfindung wird die Batterie zur Erfassung der Temperatur wenigstens teilweise geöffnet.

Dadurch ist es vorteilhafterweise möglich, die Temperatur beim Tiefentladen direkt im inneren der Batterie, beispielsweise direkt an den Batteriezellen, zu erfassen.

Weiterhin wird für ein Entsorgen, ein Recycling oder eine Wiederverwendung der Batterie diese typischerweise geöffnet. Ein weiterer Vorteil der Öffnung der Batterie ist, dass bestimmte Batteriesteuergeräte ein Tiefentladen der Batterie verhindern, und somit durch das Öffnen das Batteriesteuergerät umgangen werden kann. Mit anderen Worten kann dadurch die Entladevorrichtung direkt an den Batteriezellen beziehungsweise am Zellstapel angeschlossen werden, das heißt ein Anschließen ist dadurch vor den Hauptschützen der Batterie möglich.

In einer vorteilhaften Weiterbildung der Erfindung wird als Temperaturmesseinheit eine Wärmebildkamera verwendet.

Mit anderen Worten ist bevorzugt die Temperaturmesseinheit als Wärmebildkamera ausgebildet.

Dadurch kann die Temperatur der Batterie bei ihrer Tiefentladung vorteilhafterweise nicht invasiv erfasst werden. Zudem ermöglicht die Wärmebildkamera eine ortsaufgelöste Erfassung der Temperatur. Dadurch kann sichergestellt werden, dass kein Bereich der Batterie eine Temperatur oberhalb der maximal zulässigen Temperatur aufweist.

Gemäß einer vorteilhaften Ausgestaltung der Erfindung wird als Temperaturmesseinheit ein Temperatursensor verwendet, wobei der Temperatursensor an einer oder mehreren Batteriezellen der Batterie angeordnet ist.

Mit anderen Worten umfasst die Temperaturmesseinheit bevorzugt einen Temperatursensor, wobei der Temperatursensor an einer oder mehreren Batteriezellen der Batterie anordenbar ist.

Dies ist insbesondere bei einer bereits geöffneten Batterie von Vorteil. Durch das Öffnen der Batterie kann der Temperatursensor vorteilhafterweise unmittelbar an einer oder mehreren Batteriezellen der Batterie angeordnet werden. Es können mehrere Temperatursensoren, insbesondere für jede Batteriezelle ein Temperatursensor, vorgesehen sein. Dadurch kann vorteilhafterweise die Temperatur der Batteriezellen einzeln erfasst und überwacht werden.

In einer vorteilhaften Weiterbildung der Erfindung wird die Entladevorrichtung unmittelbar an einen oder mehreren Batteriezellen der Batterie angeschlossen.

Dies ist insbesondere bei einer bereits geöffneten Batterie von Vorteil. Dadurch kann vorteilhafterweise ein Batteriesteuergerät der Batterie, welches ein Tiefentladen verhindern könnte, übergangen werden.

Gemäß einer vorteilhaften Ausgestaltung der Erfindung wird die Temperatur mittels einer Vorlauftemperatur und Rücklauftemperatur eines Kühlmediums der Batterie erfasst.

Das ist insbesondere für Batterien von Vorteil, die eine Kühlvorrichtung mit einem zirkulierenden Kühlmedium aufweisen, bisher ungeöffnet sind und keinen Zugang auf ihr Batteriesteuergerät ermöglichen. Hierbei kann die Vorlauftemperatur und Rücklauftemperatur des Kühlmediums erfasst werden. Die Temperatur der Batterie kann dann durch die gemessene Vorlauftemperatur und Rücklauftemperatur ermittelt werden. Insbesondere wird die Temperatur basierend auf der Differenz zwischen Vorlauftemperatur und Rücklauftemperatur ermittelt.

In einer vorteilhaften Weiterbildung der Erfindung wird die maximal zulässige Temperatur in Abhängigkeit des Batterietyps der Batterie festgelegt.

Dadurch kann das Verfahren vorteilhafterweise für eine Vielzahl von Batterietypen verwendet werden.

Gemäß einer vorteilhaften Ausgestaltung der Erfindung weist die maximale zulässige Temperatur einen Wert im Bereich von 50 Grad Celsius bis 60 Grad Celsius auf.

Dadurch kann das Verfahren vorteilhafterweise für typische und weit verbreitete Batterietypen durchgeführt werden.

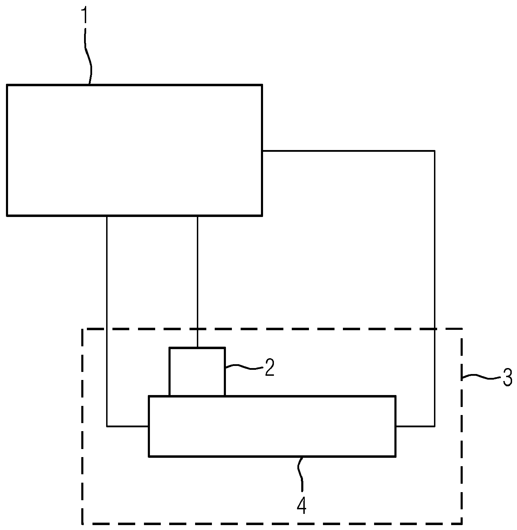

Weitere Vorteile, Merkmale und Einzelheiten der Erfindung ergeben sich aus den im Folgenden beschriebenen Ausführungsbeispielen sowie anhand der Zeichnung. Dabei zeigt die Figur schematisiert eine Entladevorrichtung gemäß einer Ausgestaltung der Erfindung.

Gleichartige, gleichwertige oder gleichwirkende Elemente können in der Figur mit denselben Bezugszeichen versehen sein.

Die Figur zeigt eine Entladevorrichtung 1, die zum Tiefentladen, insbesondere zum vollständigen Tiefentladen, einer Batterie 3 verwendet wird.

Die Entladevorrichtung 1 umfasst eine Temperaturmesseinheit 2, die zum diskreten oder kontinuierlichen Erfassen einer Temperatur der Batterie 3 beim Tiefentladen ausgebildet ist. Das Erfassen der Temperatur kann ortsaufgelöst, beispielsweise mittels einer Wärmebildkamera, erfolgen.

Gemäß der vorliegenden Ausgestaltung ist die Temperaturmesseinheit 2 als Temperatursensor ausgebildet, der an einer Batteriezelle 4 der Batterie 3 angeordnet ist. Die Batterie 3 wurde zum Anbringen des Temperatursensors 2 wenigstens teilweise geöffnet. Der wenigstens teilweise geöffnete Zustand der Batterie 3 ist in der Figur durch die gestrichelte Linie verdeutlicht.

Es können mehrere Temperatursensoren 2 sowie mehrere Batteriezellen 4 vorgesehen sein. Hierbei kann an jeder Batteriezelle 4 jeweils wenigstens ein Temperatursensor 2 angeordnet sein.

Die Batteriezelle 4 der Batterie 3 ist für ihre Tiefentladung unmittelbar an der Entladevorrichtung 1 elektrisch angeschlossen.

Weiterhin stellt die Entladevorrichtung 1 eine Entladeleistung bereit, sodass die Batterie 3 beziehungsweise die Batteriezelle 4 mit einem Entladestrom, der von der Entladeleistung abhängig ist, durch die Entladevorrichtung 1 tiefentladen, insbesondere vollständig tiefentladen, wird. Mit anderen Worten weist die Batterie 3 beziehungsweise die Batteriezelle 4 nach dem Tiefentladen bevorzugt eine Spannung von 0 Volt auf.

Die Entladevorrichtung 1 ist dazu ausgebildet, die Entladeleistung beziehungsweise den Entladestrom in Abhängigkeit der erfassten Temperatur der Batterie 3 beziehungsweise der Batteriezelle 4 zu regeln. Hierbei wird der Entladestrom durch die Entladevorrichtung 1 derart geregelt, dass die erfasste Temperatur und somit der Entladestrom beziehungsweise die Entladeleistung möglichst hoch ist, jedoch die erfasste Temperatur stets unterhalb der für die Batterie 3 maximal zulässigen Temperatur verbleibt.

Mit anderen Worten wird die Entladeleistung beziehungsweise der Entladestrom derart geregelt, dass die Temperatur der Batterie 3 beziehungsweise der Batteriezelle 4 der maximal zulässigen Temperatur möglichst nahekommt, das heißt bis auf einen festgelegten Sicherheitsabstand mit dieser übereinstimmt. Dadurch kann eine möglichst hohe Geschwindigkeit der Tiefentladung erreicht werden, und gleichzeitig die Sicherheit bei der Tiefentladung sichergestellt werden.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Entladevorrichtung
- 2: Temperaturmesseinheit
- 3: Batterie
- 4: Batteriezelle

## Patentansprüche

1. Verfahren zum Tiefentladen einer Batterie (3) mit einer Entladevorrichtung (1), wobei beim Tiefentladen eine Temperatur der Batterie mittels einer Temperaturmesseinheit (2) erfasst wird, und für das Tiefentladen eine maximal zulässige Temperatur festgelegt ist, **gekennzeichnet dadurch, dass** eine für das Tiefentladen vorgesehene Entladeleistung derart geregelt wird, dass die erfasste Temperatur möglichst hoch, jedoch kleiner als die maximal zulässige Temperatur ist.

2. Verfahren gemäß Anspruch 1, **gekennzeichnet dadurch, dass** die Entladeleistung derart geregelt wird, dass die erfasste Temperatur beim Tiefentladen wenigstens 10 Prozent, insbesondere wenigstens 20 Prozent, und höchstens 35 Prozent, insbesondere höchstens 30 Prozent, kleiner als die maximal zulässige Temperatur ist.

3. Verfahren gemäß Anspruch 1 oder 2, **gekennzeichnet dadurch, dass** die Temperatur der Batterie (3) mittels eines Batteriesteuergeräts der Batterie erfasst wird.

4. Verfahren gemäß einem der vorhergehenden Ansprüche, **gekennzeichnet dadurch, dass** die Batterie (3) zur Erfassung der Temperatur wenigstens teilweise geöffnet wird.

5. Verfahren gemäß einem der vorhergehenden Ansprüche, **gekennzeichnet dadurch, dass** als Temperaturmesseinheit (2) eine Wärmebildkamera verwendet wird.

6. Verfahren gemäß einem der vorhergehenden Ansprüche, **gekennzeichnet dadurch, dass** als Temperaturmesseinheit (2) ein Temperatursensor verwendet wird, wobei der Temperatursensor an einer oder mehreren Batteriezellen (4) der Batterie (3) angeordnet ist.

7. Verfahren gemäß einem der vorhergehenden Ansprüche, **gekennzeichnet dadurch, dass** die Entladevorrichtung (1) unmittelbar an einer oder mehreren Batteriezellen (4) der Batterie (3) angeschlossen wird.

8. Verfahren gemäß einem der vorhergehenden Ansprüche, **gekennzeichnet dadurch, dass** die Temperatur mittels einer Vorlauftemperatur und Rücklauftemperatur eines Kühlmediums der Batterie (3) erfasst wird.

9. Verfahren gemäß einem der vorhergehenden Ansprüche, **gekennzeichnet dadurch, dass** die maximal zulässige Temperatur in Abhängigkeit des Batterietyps der Batterie (3) festgelegt wird.

10. Verfahren gemäß einem der vorhergehenden Ansprüche, **gekennzeichnet dadurch, dass** die maximale zulässige Temperatur einen Wert im Bereich von 50 Grad Celsius bis 60 Grad Celsius aufweist.

11. Entladevorrichtung (1) zum Tiefentladen einer Batterie (3), wobei die Entladevorrichtung (1) eine Temperaturmesseinheit (2) zur Erfassung einer Temperatur beim Tiefentladen umfasst, und für das Tiefentladen eine maximal zulässige Temperatur festgelegt ist, **dadurch gekennzeichnet, dass** die Entladevorrichtung (1) derart zum Regeln einer für das Tiefentladen vorgesehenen Entladeleistung ausgebildet ist, dass die erfasste Temperatur möglichst hoch, jedoch kleiner als die maximal zulässige Temperatur ist.

12. Entladevorrichtung (1) gemäß Anspruch 11, **dadurch gekennzeichnet, dass** die Temperaturmesseinheit (2) derart ausgebildet ist, dass die Temperatur der Batterie (3) mittels eines Batteriesteuergeräts der Batterie (3) erfasst wird.

13. Entladevorrichtung (1) gemäß Anspruch 11 oder 12, **dadurch gekennzeichnet, dass** die Temperaturmesseinheit (2) als Wärmebildkamera ausgebildet ist.

14. Entladevorrichtung (1) gemäß einem der Ansprüche 11 bis 13, **dadurch gekennzeichnet, dass** die Temperaturmesseinheit (2) einen Temperatursensor umfasst, wobei der Temperatursensor an einer oder mehreren Batteriezellen (4) der Batterie (3) anordenbar ist.

15. Verfahren zum Entsorgen, zum Recycling oder zur Wiederverwendung einer Batterie (3), **gekennzeichnet dadurch, dass** hierbei die Batterie (3) mittels eines Verfahrens gemäß einem der Ansprüche 1 bis 10 tiefentladen wird.
